# NEW EUROPEAN PATENT SPECIFICATION

(11) **EP 1 464 540 B2**
(45) Date of publication and mention of the opposition decision: **01.09.2010**
(45) Mention of the grant of the patent: 17.05.2006
(21) Application number: 04004522.1
(22) Date of filing: 27.02.2004
(51) Int. Cl.: B60R 1/00, H04N 7/18, G08G 1/00, B60R 11/04

(54) **Monitoring system for vehicle**
Fahrzeugüberwachungssystem
Système de surveillance de véhicule

(30) Priority: 31.03.2003 JP 2003094099
(43) Date of publication of application: 06.10.2004
(73) Proprietor: Mazda Motor Corporation, Aki-gun, Hiroshima, (JP); SHARP CORPORATION, Osaka (JP)
(72) Inventor: Kanada, Norifumi, Aki-gun Hiroshima (JP); Harada, Tsukasa, Aki-gun Hiroshima (JP); Hirozawa, Manabu, Aki-gun Hiroshima (JP); Shobun, Hiroshi, Aki-gun Hiroshima (JP); Kumata, Kiyoshi, Tenri-shi Nara (JP)
(74) Representative: Laufhütte, Dieter

(56) References cited:
- WO-A1-2004/068440
- DE-A1- 4 210 046
- DE-A1- 10 031 590
- DE-C1- 4 336 288
- FR-A1- 2 794 700
- US-A- 5 648 835
- US-A1- 2001 048 816
- PATENT ABSTRACTS OF JAPAN vol. 1997, no. 09, 30 September 1997 (1997-09-30) & JP 9 118178 A (NISSAN MOTOR CO LTD), 6 May 1997 (1997-05-06)
- PATENT ABSTRACTS OF JAPAN vol. 0092, no. 31 (M-414), 18 September 1985 (1985-09-18) & JP 60 088657 A (NISSAN JIDOSHA KK), 18 May 1985 (1985-05-18)
- PATENT ABSTRACTS OF JAPAN vol. 0112, no. 49 (E-532), 13 August 1987 (1987-08-13) & JP 62 061486 A (SEIKO EPSON CORP), 18 March 1987 (1987-03-18)

## Description

The present invention relates to a monitoring system for a vehicle.

A monitoring system according to the preamble of claim 1 is known from JP-A-09118178.

It is very important from the viewpoint of safe driving to enable a vehicle driver to visually identify or figure out a situation of a peripheral-area of the vehicle, in particular surroundings of the vehicle that are apt to be out of the sweep of the driver's eye. On this account, it has been proposed to equip a vehicle with an all-directional camera capable of providing an image of a peripheral-scene of the vehicle and displaying the image on a display installed in the vehicle. All-directional cameras are generally composed of a convex reflecting mirror for reflecting an external scene and an image pick-up device such as a charge coupled device (CCD) for acquiring an image of the external scene reflected by the convex reflecting mirror to display the image on a monitor display. Such an all-directional camera is capable of picking up an image of a wide-ranging surroundings of the vehicle.

However, according to the conventional all-directional camera, a picked up image of a peripheral-scene of a vehicle is remarkably distorted and, in consequence, is hardly recognizable for the driver. One of approaches to solving this problem that is known from, for example, Japanese Unexamined Patent Publication No. 2000-118298 is to convert an all-directional image into an image projected on a virtual cylinder and to display the converted image on a monitor display.

Another approach is, as disclosed in, for example, Japanese Unexamined Patent Publication No. 2000-118298, to provide a vehicle with front and rear all-directional cameras to acquire images of front and rear peripheral-scenes of the vehicle, respectively, that are selectively displayed on a monitor display automatically according to running range positions of a transmission of the vehicle. More specifically, when the transmission is put in a forward range position, an image acquired by the front all-directional camera is displayed on the monitor display and, on the other hand, when the transmission is put in a reverse position, an image acquired by the rear all-directional camera is displayed on the monitor display.

Incidentally, there is a strong demand for adaptation of an all-directional camera to picking up an image of surroundings of the vehicle, in particular a peripheral-road surface and its vicinity close to the vehicle. That is, when putting a car in a garage or parallel parking a car, it is necessary to pull over the car to curbs or obstacles as close as possible. In order to display an image of such a curb or an obstacle close to the vehicle to guess a clearance on the monitor display by the eye, the all-directional camera has come to be used for picking up an image of a peripheral-ground surface of the vehicle.

However, as was previously described, because a picked up image of an obstacle is remarkably distorted, it is inevitable that the image displayed on the monitor display is significantly different from a direct look of the obstacle even though the image is modified through image processing. Therefore, it is hard for the driver to figure out a relative position of the own vehicle to an obstacle, e.g. how far and in which direction the obstacle is, on a mere sight of the displayed image.

It is therefore an object of the present invention to provide a monitoring system for a vehicle that displays an image of a peripheral-scene acquired by an all-directional image pickup device that enables a viewer such as a driver to figure out a relative position of the vehicle to an obstacle in the peripheral-area.

The above object is accomplished by a monitoring system for monitoring a situation surrounding a vehicle according to claim 1.

The driver is thereby enabled to easily figure out a relative position of the vehicle to obstacles, e.g. how far and in which direction the obstacles are, on the basis of the break line displayed on the display means.

According to the invention, the reflecting mirror is positioned with the partly convex reflective surface directed downward and the imaging device is disposed approximately right below the reflecting mirror, an optical axis of the partly convex reflective surface is inclined toward an outside of the vehicle body from bottom to top. More specifically, the optical axis of the partly convex reflective surface is inclined forward and/or laterally outward from bottom to top with respect to a vertical direction of the vehicle body.

With the inclined configuration, the all-directional image pick-up means can acquire a peripheral-ground surface closer to the vehicle than an all-directional image pick-up means having an optical axis extending vertically straight. Furthermore, it is expected that the all-directional image pick-up means with the optical axis inclined from bottom to top prevents a part falling downward through which light rays from a peripheral-scene incident toward the reflecting mirror from getting smeared from raindrops during rainfall, and hence makes it unnecessary to sweep the part clear of raindrops. In particular, When taking into account the situation that the monitoring system is used on low-speed driving where it is generally unexpected in effect that raindrops on the part falling downward of the all-directional image pick-up means is blown away by head-on wind.

It is preferably that the all-directional image pick-up means is mounted on a bumper of the vehicle body, and hence the break line is defined by an outermost profile of the bumper. This enables the driver to figure out a relative position, distance and direction, of an obstacle based on the break line representing the bumper.

It is preferred that the image pick-up means is enclosed within a casing in which the reflecting mirror and the imaging device are fixedly held and which is movable between a working position in which the image pick-up means is exposed out of the vehicle body and a hidden position in which the image pick-up means stays in hiding in the vehicle body. With this configuration, when it is unwanted to display an image of a peripheral-scene of the vehicle, the image pick-up means is hidden within the vehicle body such as a bumper, and hence does not bulge out of the vehicle body, in the hidden position with the consequence that the image pick-up means, on one hand, contributes to reducing running resistance and, on the other hand, measures up to tamper safing purpose.

According to the monitoring system using an all-directional image pick-up means enables the driver to figure out a situation in a wide area of the vehicle body, in particular surroundings on a peripheral-ground area close to the vehicle body. Further, the monitoring system that displays an image containing a break line representative of a marginal part of the vehicle body enables the driver to easily figure out a relative position of the vehicle to obstacles on the basis of the break line on the monitor display.

The above and other objects and features of the present invention will be understood from the following description of a specific embodiment thereof when considering in conjunction with the accompanying drawings, wherein the same reference numerals denote same or similar parts throughout the drawings, and in which:
Figures 1 is a perspective view of a vehicle equipped with a monitoring system according to a preferred embodiment of the present invention;
Figures 2 is a sectional side view of an all directional camera;
Figures 3 is a schematic plane view of a vehicle equipped with the all-directional camera inclined forward and laterally outward with respect to a vertical direction;
Figures 4 is a schematic front view of a peripheral part of the all-directional camera;
Figures 5 is a side view showing the all-directional camera, partly in sectional, in a working position and its associated vehicle body in details;
Figures 6 is a sectional side view of the all-directional camera in a hidden position and its associated vehicle body in details;
Figure 7 is a block diagram illustrating a control system of the monitoring system;
Figure 8 is a schematic plane view showing obstacles existing in close vicinity to the vehicle body;
Figure 9 is an explanatory view of a monitor display on which an image of a vicinity of the vehicle body shown in Figure 8 is displayed;
Figures 10 is a schematic plane view of a vehicle equipped with an all-directional camera inclined laterally outward with respect to a vertical direction;
Figures 11 is a schematic plane view of a vehicle equipped with an all-directional camera inclined forward with respect to a vertical direction; and
Figures 12(A) and (B) are explanatory views showing a triangulation range finding method of finding a distance of an obstacle from the vehicle body.

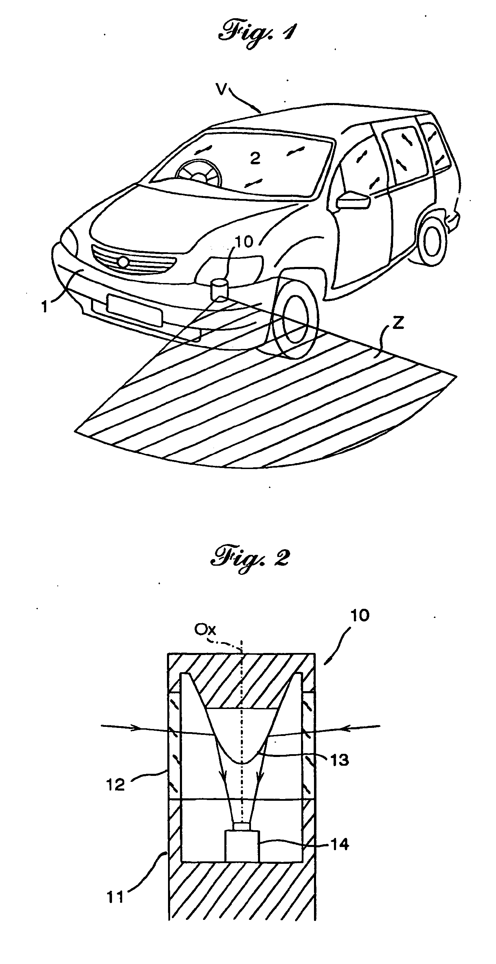

Referring to the drawings in detail, and, in particular, to Figure 1 showing a vehicle body V, more specifically a right-hand drive vehicle, equipped with a steering wheel 2 on the driver's side. The vehicle body V is provided a front bumper 1 and an all-directional monitoring system that comprises an all-directional monitoring camera (which is hereafter referred to as a monitoring camera for simplicity) 10 and a driving mechanism 30 which are installed to the bumper 1 at one of opposite ends remote from the driver's side, i.e. at the left end. The monitoring camera 10 is movable between a working position in which the monitoring camera 10 is exposed out of the vehicle body V and a hidden position in which the monitoring camera 10 stays in hiding in the bumper 1 as will be described later.

Referring to Figure 2 showing the monitoring camera 10 by way of example, the monitoring camera 10 comprises a camera 14 and a convex reflecting mirror 13 put in a cylindrical casing 11 formed at least partly by a transparent wall member 12. The convex reflecting mirror 13 has a convex surface of rotation formed by rotating a predetermined convex curved line about an axis of rotation in alignment with an optical axis of the camera 14. The convex curved line may be a circular curve, a hyperbolic curve, a parabola or the like. The convex reflecting mirror 13 is placed with the bottom up so as to reflect light rays incident thereupon through the transparent wall member 12 toward the camera 14. The camera 14 comprises an objective lens system (not shown) placed opposite to the convex reflecting mirror 13 and a solid state image sensing device such as CCD or CMOS. The solid state image sensing device converts an optical image of a peripheral-scene (shaded and indicated by a symbol Z in Figure 1) formed on the solid state image sensing device by the objective lens system into electric signals. Since the convex reflecting mirror 13 is convex over the entire reflective surface, the monitoring camera 10 can sweep a surrounding area in all direction or with a 360-degree field of view, more specifically a surrounding area except the vehicle with approximately 270-degree field of view. Although all-directional cameras generally refers to pantoscopic cameras having a field of view greater than 180 degrees, however, the all-directional camera used as the monitoring device of this invention is not always exclusive to those.

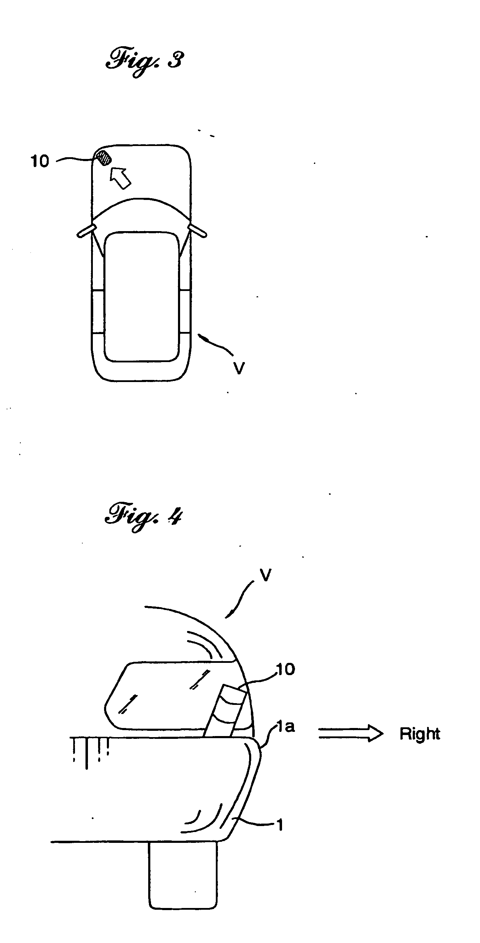

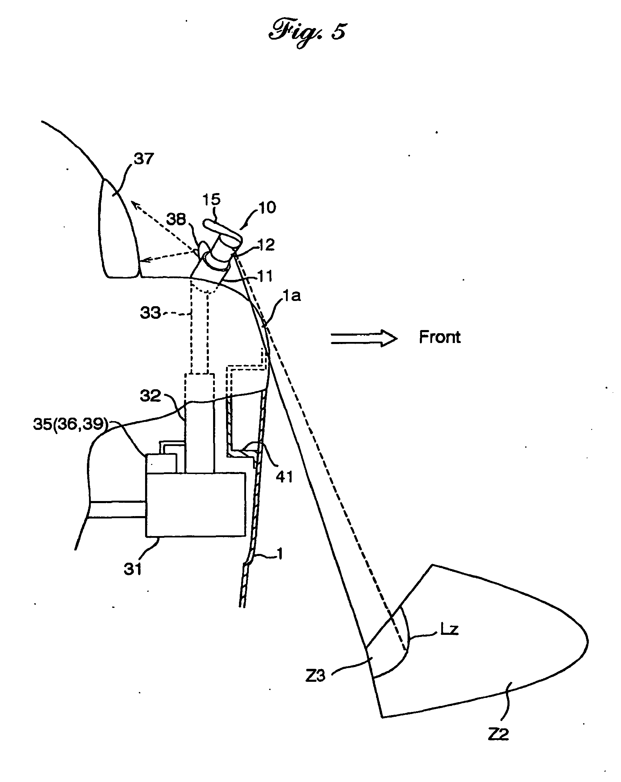

As shown in Figures 3 to 5, the monitoring camera 10 is designed to have an axis of vision Ox (see Figure 2) inclined forward and laterally outside from bottom to top with respect to a vertical direction of the vehicle body V. According to this configuration, the monitoring camera 10 tilts with the transparent wall member 12 of the casing 11 oriented toward a ground area at a short distance to the vehicle body V so as to align the field of view on the ground area Z2, except a local ground area Z3 in the shadow of the vehicle body V, as clearly shown in Figure 5. More specifically, the convex reflecting mirror 13 is designed and positioned to have a field of view Z including a break line Lz provided by an outermost, i.e. rightmost, local surface of the vehicle body V such as a rightmost local surface 1a of the bumper 1 in this embodiment when the monitoring camera 10 is in the working position. As apparent, light rays from the local ground area Z3 define by the break line Lz are blocked out by the rightmost edge 1a of the bumper 1. In other words, an image provided by the monitoring camera 10 is a combination of an image of the ground area Z2 and an image of the rightmost edge 1a of the front bumper 1 corresponding to the local ground area Z3 defmed by the break line Lz.

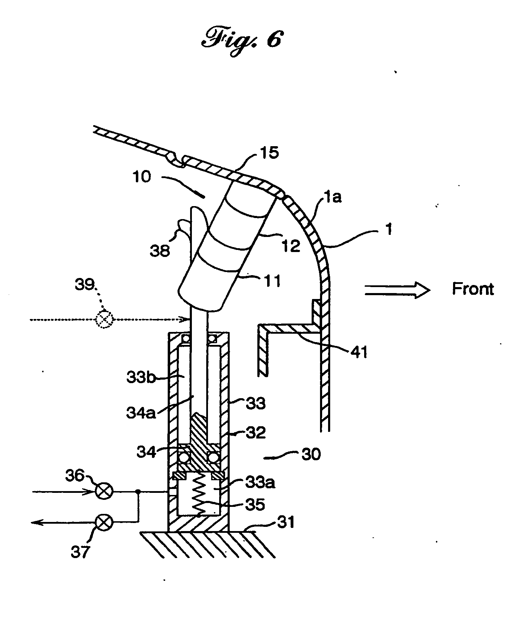

Figures 5 and 6 show the driving mechanism 30 for driving the monitoring camera 10 between the working position in which the monitoring camera 10 is largely exposed out of the vehicle body V, specifically the front bumper 1 in this embodiment (see Figure 5) and a hidden position in which the camera 10 stays in hiding in the front bumper 1 (see Figure 6). The casing 11 is provided with a shroud 15 formed as an integral piece thereof which is in flush with the outer surface of the bumper 1 when the monitoring camera 10 is in the hidden position and a washing fluid injection nozzle 38 which sprays a head light with a washing fluid as will be described later. The washing fluid injection nozzle 38. The driving mechanism 30 includes a washer motor 31 (schematically shown in Figure 5) fixedly attached to a stationary part of the vehicle body V in a position behind a front wall portion of the front bumper 1 and below the monitoring camera 10, and the a cylinder 32 fixedly mounted on the washer motor 31. The cylinder 32 comprises a cylinder barrel 33, a piston 34 received for sliding movement in the cylinder barrel 33, a plunger 34a formed as an integral piece of the piston 34 and a return spring 35. The plunger 34 at its top end is rigidly connected to the monitoring camera 10. The interior of the cylinder barrel 33 is divided into two, namely lower and upper cylinder chambers 33a and 33b by the piston 34. The lower chamber 33a, that is watertight, is connected to a washing fluid tank (not shown) through valves, namely a fluid supply valve 36 and a fluid drain valve 37. The cylinder barrel 33 at the top end supports the plunger 34a for slide movement and allows are to enter and exit the lower chamber 33b. The return spring 35 is fixedly connected to the piston 34 and the bottom of the cylinder barrel 33 to pull the piston 34 always downward.

The driving mechanism 30 operates to move the monitoring camera 10 between the hidden position and the working position in the following manner. When the washer motor 31 is activated to rotate after or simultaneously with opening the fluid supply valve 36 and closing the fluid drain valve 37 while the monitoring camera 10 is in the hidden position, a washing fluid is supplied into the lower chamber 33a of the cylinder 32 to force the piston 34 upward against the return spring 35, so as thereby to move the monitoring camera 10 to the working position from the hidden position. On the other hand, when opening the fluid drain valve 36 simultaneously closing the fluid supply valve 36 to drain the washing fluid from the lower chamber 33a of the cylinder 33, the piston 34 is forced down to retract the plunger 34a, so as thereby to move the monitoring camera 10 to the hidden position from the working position. The washing fluid drained from the lower chamber 33a of the cylinder 33 is returned into the washing fluid tank.

The washer fluid is supplied to the washing fluid injection nozzle 38 by the washer motor 31 but independent of the cylinder 32 of the driving mechanism 30. Specifically, a fluid supply valve 39 is provided in parallel to the fluid supply and drain valves 36 and 37 between the washing fluid tank and the washing fluid injection nozzle 38. As will be described later, upon activation of the washer motor 31, the fluid supply valve 39 is simultaneously opened to supply the washing fluid to the washing fluid injection nozzle 38. While the washer motor 31 remains activated, the washing fluid is sprayed on the head light through the washing fluid injection nozzle 38. The washing fluid may be supplied directly to the washing fluid injection nozzle 38 through a flexible fluid supply pipe or through a fluid supply passage formed in the piston 34 and plunger 34a.

It is often usual practice to provide a generally U-shaped front bumper reinforcement 41 fixedly attached to the front wall portion pf the front bumper 1 from the back and extending in the transverse direction of the vehicle body V. In this case, there is fear that the monitoring camera 10 is brought into mechanical interference with the front bumper reinforcement 41 if the monitoring camera 10 is moved straight downward into the hidden position. In order to avoid such mechanical interference with the front bumper reinforcement 41, the monitoring camera 10 is required to be located as far backward from the front wall portion of the front bumper 1 as possible. This configuration exerts restraints on the field of view Z of the monitoring camera 10 that is desired to be at a short distance from the vehicle body V. In other words, in order to for the monitoring camera 10 to have a field of view at a short distance from the vehicle body V, it is desirable to locate the monitoring camera 10, more specifically the convex reflecting mirror 13, as far forward and laterally as possible. With that background, the inclined or tilting configuration of the monitoring camera 10, it is realized to strike a balance between providing the monitoring camera 10 with a field of view Z close to the vehicle body V in the working position and eliminating mechanical interference of the monitoring camera 10 with the front bumper reinforcement 41 during movement from the working position to the hidden position.

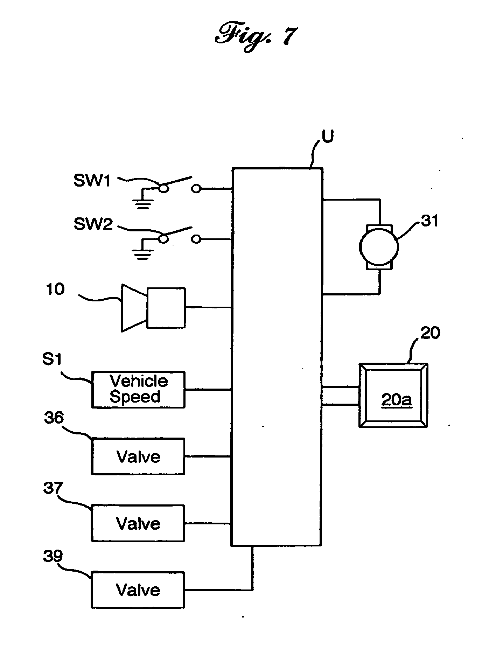

Figure 7 schematically shows a control system 50 of the monitoring system that includes a control unit U comprising a microcomputer, a vehicle speed sensor S1 and control switches, namely a monitor switch SW1 and a washer switch SW2. The control unit U receives a signal representative of a vehicle speed from the vehicle speed sensor S1, signals from the control switches SW1 and SW2 and signals into which the camera 14 converts an optical image formed thereon. The control unit U processes the signals provided by the monitoring camera 10 to generate and provide image signals to a display device 20 to display a video image of the field of view Z picked up by the monitoring camera 10 on a display screen 20a. Each of these switches SW1 is manually switched on to provide a control signal to the control unit U. When control unit U activates the washer motor 31 to rotate in response to receipt of a control signal from the monitor switch SW1 or the washer switch SW2. Further, the control unit U activates the fluid supply valve 36 in response to receipt of the control signal from the monitor switch SW1. Then, the washer motor 31 forces and supplies a washing fluid into the lower cylinder chamber 33a of the cylinder 33 of the driving mechanism 30 through the fluid supply valve 36, so as thereby to lift the piston 34, and hence the plunger 34a, upward. As a result, the monitoring camera 10 is moved into the working position. The control unit U activates the monitoring camera 10 during movement into the working position or on arrival in the working position and keeps the monitoring camera 10 activated as long as the vehicle speed sensor S1 monitors a vehicle speed less than a predetermined speed, for example approximately 20 km/h. When the monitoring camera 10 arrives in the working position, the control unit U deactivates the washer motor 31 to stop and the fluid supply valve 36 to close, so as thereby to keep the piston 34, and hence the plunger 34a, lifted up. The control unit U continuously provides video signals to the display device 20 to display a video image of the field of view Z picked up by the monitoring camera 10 on the display screen 20a while the vehicle speed sensor S1 monitors a vehicle speed less than the predetermined speed.

When the washer switch SW2 is switched on while the monitoring camera 10 in the working position remains activated, the control unit U activates the washer motor 32 to rotate and the fluid supply valve 39 to open, so as thereby to supply a washing fluid to the washing fluid injection nozzle 38 through the fuel supply valve 39 to sprays a head light with the washing fluid through the washing fluid injection nozzle 38.

When the monitor switch SW1 is switched off while the monitoring camera 10 in the working position remains actuated, the control unit U deactivates the fluid drain valve 37 to open, then the piston 34, and hence the plunger 34a, is forced downward by the return spring 35 discharging the washing fluid from the lower cylinder chamber 33a of the cylinder 33 of the driving mechanism 30 through the fluid drain valve 37, so as thereby to pull down the monitoring camera 10 into the hidden position. The control unit U deactivates the monitoring camera 10 upon downward movement of toward the hidden position.

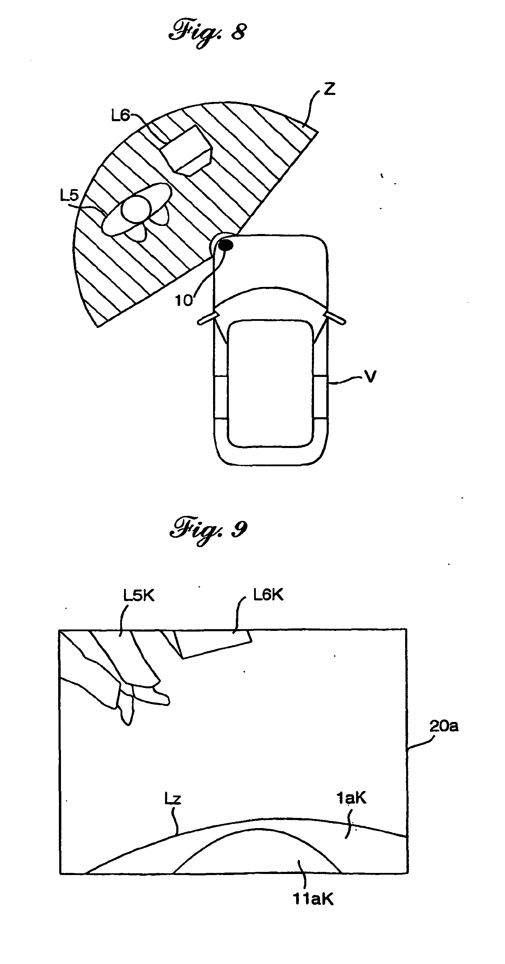

Figures 8 and 9 shows a display of a video image of the field of view Z picked up by the monitoring camera 10 on the display screen 20a of the display device 20. In the event wherein two stumbling blocks, namely, for example, a human body L5 and a cardboard box L6, are there in the field of view Z of the monitoring camera 10 as shown in Figure 8, a video image appears on the display screen 20a of the display device 20 as shown in Figure 9. The video image on the display screen 20a of the display device 20 includes a figure image LK5 of a lower part of the human body L5, an image LK6 of a lower part of the cardboard box L6, an image 1aK of a part of the front bumper 1 that is defined by the break line Lz (rightmost edge 1a of the bumper 1), and an image 11 aK of a part of the casing 11 of the monitoring camera 10.

If the video image displayed on the display screen 20a of the display device 20 includes only the stumbling blocks L5 and L6, it is hard for the driver to make a swift decision of distances to and/or directions of the stumbling blocks L5 and L6. However, according to the monitoring system, since the video image displayed on the display screen 20a of the display device 20 always includes a break line Lz representing as a profile line of the outermost part of the vehicle body V (the rightmost part 1a of the bumper 1 in this embodiment) as together with images L5K and L6K of the stumbling blocks L5 and L6, the driver can determine a position of the vehicle body V relative to the stumbling blocks L5 and L6 on the basis of the break line Lz on the display screen 20a of the display device 20. In Figure 9, an area formed between the break line Lz and the shadow 11aK corresponds the local ground area Z3 shown in Figure 5.

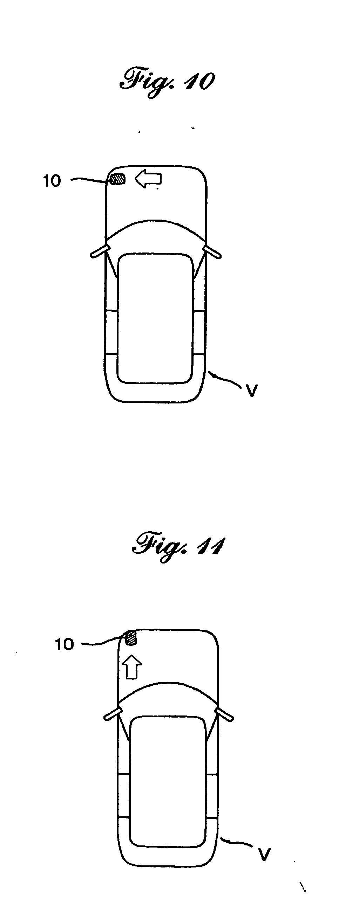

Figures 10 and 11 show monitoring systems for a vehicle according to other embodiments of the present invention, respectively. The monitoring system shown in Figure 10 is the same in structure and operation as that of the previous embodiment except that an all-directional monitoring camera 10 of the monitoring system is inclined differently from that of the previous embodiment. More specifically, the monitoring camera 10 is oriented with its optical axis Ox inclined laterally outward from bottom to top with respect to a vertical direction of the vehicle body V in the working position. According to this configuration, the monitoring camera 10 is put in a position in the working position wherein a lower quarter around a front right part, in particular on the right side, of the vehicle body V falls within the field of view. The monitoring system shown in Figure 11 is also the same in structure and operation as that of the previous embodiment except that an all-directional monitoring camera 10 of the monitoring system is oriented with its optical axis Ox inclined forward and laterally outward from bottom to top with respect to a vertical direction of the vehicle body V. According to this inclined configuration, the monitoring camera 10 in the working position is put in a position where a lower quarter around, in particular on the front side, of the front right part of the vehicle body V falls within the field of view.

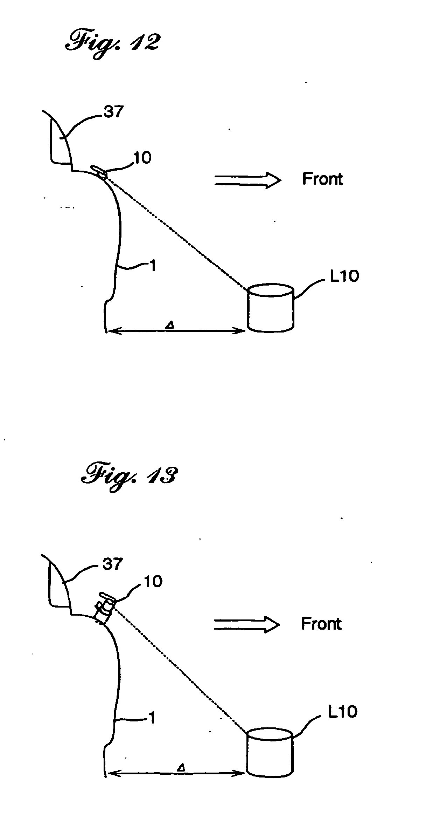

Figures 12(A) and 12 (B) show the principle of range finding method of finding a distance between the vehicle body V and an obstacle in a peripheral-ground area close to the vehicle body V. The monitoring system compares two images, one of which is taken by the monitoring camera 10 that reaches an inceptive position in which the monitoring camera 10 puts its head out of the bumper 1 sufficiently enough to bring at least an aimed portion, e.g. a side wall, of an obstacle L10 into the field of view during the course of movement to the working position as shown in Figure 12(A) and the other of which is taken by the monitoring camera 10 reaches the working position as shown in Figure 12(B), to find a positional change of the target part of the obstacle 10L between the two images. A distance Δ of the obstacle 10L from the vehicle body V can be calculated on the basis of the positional change and a moved distance of the monitoring camera 10 between the inceptive position and the working position in a well known manner, for example through the use of trigonometric survey.

Although having been described on the preferred embodiments, the present invention is not applied exclusively to these embodiment and includes various other embodiments and variants as defined by the claims. For example, the reflective surface of the monitoring camera 10 may be of partly non-planar or may be of partly convex. The monitoring camera 10 is mounted on a front end portion of the vehicle body on the left. Further, in the case of a left-hand drive vehicle, the monitoring camera is mounted in a position bilaterally symmetrical to the mounting position of the right-hand drive vehicle shown in Figures 3 to 5.

The monitoring camera 10 may be moved along its own optical axis Ox between the hidden position and the working position.

The monitoring camera 10 may be mounted not directly on the front bumper 1 but on a tip end of a corner pole or the like that extends above the front bumper 1. It is obvious to provide a vehicle with a plurality of the monitoring cameras 10 at different positions of the vehicle body.

## Claims

1. A monitoring system for monitoring a situation surrounding a vehicle which comprises all-directional image pick-up means (10) to be mounted on a vehicle body (V) for picking up an image of a peripheral ground area of and close to the vehicle body (V) and display means (20) to be disposed inside the vehicle body (V) for displaying said image picked up by said image pick-up means (10) whereby
said all-directional image pick-up means (10) comprises:
a reflecting mirror (13) having a reflective surface directed downward, the reflecting surface being made at least partly convex to reflect said scene including a break line (Lz) defined by a profile of an outermost part (1a) of the vehicle body and
an image device (14) disposed below said reflecting mirror (13) facing said reflective surface so as to receive a scene reflected by said reflecting mirror (13) to form an image of said scene,
**characterized in that** said all-directional image pick-up means (10) is mounted on a front end portion of the vehicle body on the left end for a right-hand drive vehicle or the right end for a left-hand drive vehicle and
said reflecting surface has an optical axis (Ox) which is inclined toward an outside of the vehicle body (V) from bottom to top with respect to a vertical direction of the vehicle body (V).

2. The monitoring system as defined in claim 1, **characterized in that** said display means (20) displays said image including said break line (Lz) together with said peripheral-ground area.

3. The monitoring system as defined in claim 1, **characterized in that** said optical axis (Ox) of said partly convex reflective surface is inclined from bottom to top with respect to a longitudinal direction of the vehicle body (V).

4. The monitoring system as defined in claim 1, **characterized in that** said optical axis (Ox) of said partly convex reflective surface is inclined forward and laterally outward from bottom to top with respect to a longitudinal direction of the vehicle body (V).

5. The monitoring system as defined in claim 1, **characterized in that** said all-directional image pick-up means (10) is mounted on a bumper (1) of the vehicle body (V) so as to define said break line (Lz) by a profile of an outermost end (1a) of said bumper (1).

6. The monitoring system as defined in claim 1, **characterized in that** said all-directional image pick-up means (10) has a casing (11) in which said reflecting mirror (13) and said image device (14) are fixedly held and which is movable between a working position in which said all-directional image pick-up means (10) is exposed out of the vehicle body (V) and a hidden position in which said all-directional image pick-up means (10) stays in hiding in the vehicle body (V).

7. The monitoring system as defined in claim 1, **characterized in that** said partly convex reflective surface is positioned above said outermost profile of the vehicle body (V) in vertical direction.

8. The monitoring system as defined in claim 6, **characterized in that** said partly convex reflective surface is positioned above said outermost profile of the vehicle body (V) in vertical direction when said all-direction image pick-up means (10) is in said working position.

## Patentansprüche

1. Überwachungssystem zur Überwachung einer Situation im Umkreis eines Fahrzeugs mit auf einer Fahrzeugkarosserie (V) zu montierenden Allrichtungs-Bilderfassungsmitteln (10) zum Erfassen eines Bildes eines die Fahrzeugkarosserie (V) umgebenden und in dessen Nähe befindlichen Bodenbereichs und innerhalb der Fahrzeugkarosserie (V) anzuordnende Anzeigemittel (20) zum Anzeigen des von den Bilderfassungsmitteln (10) erfassten Bildes, wobei
das Allrichtungs-Bilderfassungsmittel (10) einen Reflexspiegel (13) mit einer nach unten gerichteten reflektierenden Oberfläche umfasst, wobei die reflektierende Oberfläche zumindest teilweise konvex ausgeführt ist, um die Szenerie einschließlich einer durch ein Profil eines am weitesten außen gelegenen Teils (1 a) der Fahrzeugkarosserie definierten Trennlinie (Lz) zu reflektieren, sowie eine unterhalb des Reflexspiegels (13) angeordnete Bildvorrichtung (14), die der reflektierenden Oberfläche so gegenüber liegt, dass sie eine von dem Reflexspiegel (13) reflektierte Szenerie auffängt, um ein Bild der Szenerie auszubilden,
**dadurch gekennzeichnet, dass** das Allrichtungs-Bilderfassungsmittel (10) an einem Vorderendabschnitt der Fahrzeugkarosserie an dem linken Ende bei einem Fahrzeug mit Rechtssteuerung oder an dem rechten Ende bei einem Fahrzeug mit Linkssteuerung montiert ist und
die reflektierende Oberfläche eine optische Achse (Ox) aufweist, die bezüglich der vertikalen Richtung der Fahrzeugkarosserie (V) von unten nach oben zu einer Außenseite der Fahrzeugkarosserie (V) hin geneigt ist.

2. Überwachungssystem nach Anspruch 1, **dadurch gekennzeichnet, dass** das Anzeigemittel (20) das Bild einschließlich der Trennlinie (Lz) zusammen mit dem umgebenden Bodenbereich anzeigt.

3. Überwachungssystem nach Anspruch 1, **dadurch gekennzeichnet, dass** die optische Achse (Ox) der teilweise konvexen, reflektierenden Oberfläche bezüglich einer Längsrichtung der Fahrzeugkarosserie (V) von unten nach oben geneigt ist.

4. Überwachungssystem nach Anspruch 1, **dadurch gekennzeichnet, dass** die optische Achse (Ox) der teilweise konvexen, reflektierenden Oberfläche bezüglich einer Längsrichtung der Fahrzeugkarosserie (V) nach vorne und von unten nach oben seitlich nach außen geneigt ist.

5. Überwachungssystem nach Anspruch 1, **dadurch gekennzeichnet, dass** das Allrichtungs-Bilderfassungsmittel (10) so auf einem Stoßfänger (1) der Fahrzeugkarosserie (V) montiert ist, dass es die Trennlinie (Lz) durch ein Profil eines am weitesten außen gelegenen Endes (1 a) des Stoßfängers (1) definiert.

6. Überwachungssystem nach Anspruch 1, **dadurch gekennzeichnet, dass** das Allrichtungs-Bilderfassungsmittel (10) ein Gehäuse (11) aufweist, in dem der Reflexspiegel (13) und die Bildvorrichtung (14) ortsfest gehalten werden und das zwischen einer Arbeitsstellung, in der das Allrichtungs-Bilderfassungsmittel (10) außerhalb der Fahrzeugkarosserie (V) freiliegt, und einer verdeckten Stellung, in der das Allrichtungs-Bilderfassungsmittel (10) innerhalb der Fahrzeugkarosserie (V) verborgen bleibt, bewegt werden kann.

7. Überwachungssystem nach Anspruch 1, **dadurch gekennzeichnet, dass** die teilweise konvexe, reflektierende Oberfläche in vertikaler Richtung oberhalb des am weitesten außen liegenden Profils der Fahrzeugkarosserie (V) angeordnet ist.

8. Überwachungssystem nach Anspruch 1, **dadurch gekennzeichnet, dass** die teilweise konvexe, reflektierende Oberfläche in vertikaler Richtung oberhalb des am weitesten außen liegenden Profils der Fahrzeugkarosserie (V) angeordnet ist, wenn sich das Allrichtungs-Bilderfassungsmittel (10) in der Arbeitsstellung befindet.

## Revendications

1. Système de surveillance destinée à surveiller une situation autour d'un véhicule, comprenant des moyens de saisie d'images toutes directions (10) à monter sur la carrosserie d'un véhicule (V) pour saisir une image d'une zone du sol autour de la carrosserie du véhicule (V) et de la zone adjacente, et des moyens d'affichage (20) à disposer à l'intérieur de la carrosserie du véhicule (V) pour afficher l'image saisie par les moyens de saisies d'image (10),
le moyen de saisie d'images toutes directions (10) comprenant :
un miroir réflecteur (13) ayant une surface réfléchissante orientée vers le bas, la surface réfléchissante étant formée au moins partiellement de manière convexe pour réfléchir ladite scène comprenant une ligne de séparation (Lz) définie par un profil d'une extrémité (1a) de la carrosserie du véhicule et
un dispositif d'imagerie (14) disposé au-dessous dudit miroir réflecteur (13) faisant face à ladite surface réfléchissante afin de recevoir une scène réfléchie par ledit miroir réflecteur (13) pour former une image de ladite scène,
**caractérisé en ce que** ledit moyen de saisie d'images toutes directions (10) est monté sur une partie avant de la carrosserie du véhicule sur la section gauche pour un véhicule de conduite à droite ou sur la section droite pour un véhicule de conduite à gauche et
**en ce que** ladite surface réfléchissante possède un axe optique (Ox) qui est incliné, du bas vers le haut, vers l'extérieur de la carrosserie du véhicule (V), par rapport à un sens vertical de la carrosserie du véhicule (V).

2. Système de surveillance selon la revendication 1, **caractérisé en ce que** ledit moyen d'affichage (20) affiche ladite image comprenant ladite ligne de séparation (Lz), conjointement avec ladite zone de sol périphérique.

3. Système de surveillance selon la revendication 1, **caractérisé en ce que** ledit axe optique (Ox) of de ladite surface réfléchissante partiellement convexe est incliné du bas vers le haut par rapport à un sens longitudinal de la carrosserie du véhicule (V).

4. Système de surveillance selon la revendication 1, **caractérisé en ce que** ledit axe optique (Ox) de ladite surface réfléchissante partiellement convexe est incliné vers l'avant et latéralement vers l'extérieur, du bas vers le haut, par rapport à un sens longitudinal de la carrosserie du véhicule (V).

5. Système de surveillance selon la revendication 1, **caractérisé en ce que** ledit moyen de saisie d'images toutes directions (10) est monté sur un pare-chocs (1) de la carrosserie du véhicule (V) afin de définir ladite ligne de séparation (Lz) par un profil d'une extrémité (1 a) dudit pare-chocs (1).

6. Le système de surveillance selon la revendication 1, **caractérisé en ce que** ledit moyen de saisie d'images toutes directions (10) possède un boîtier (11) dans lequel ledit miroir réflecteur (13) et ledit dispositif d'imagerie (14) sont maintenus de manière fixe et qui est déplaçable entre une position de travail à laquelle ledit moyen de saisie d'images toutes directions (10) est exposé hors de la carrosserie du véhicule (V) et une position dissimulée dans laquelle ledit moyen de saisie d'images toutes directions (10) reste dissimulé dans la carrosserie du véhicule (V).

7. Système de surveillance selon la revendication 1, **caractérisé en ce que** ladite surface réfléchissante partiellement convexe est positionnée au-dessus dudit profil situé à l'extrémité de la carrosserie du véhicule (V) dans le sens vertical en.

8. Système de surveillance selon la revendication 6, **caractérisé en ce que** ladite surface réfléchissante partiellement convexe est positionnée au-dessus dudit profil situé à l'extrémité de la carrosserie du véhicule (V) dans le sens vertical, si ledit moyen de saisie d'images toutes directions (10) est dans ladite position de travail.
